# EUROPÄISCHE PATENTSCHRIFT

(11) **EP 2 346 051 B1**
(45) Veröffentlichungstag und Bekanntmachung des Hinweises auf die Patenterteilung: **25.06.2014**
(21) Anmeldenummer: 11000215.1
(22) Anmeldetag: 13.01.2011
(51) Int. Cl.: H01F 7/06, F16F 15/023, F16F 15/03, H01F 7/02, H01F 7/127

(54) **Magnetaktor sowie Verfahren zu dessen Montage**
Magnetic actuator and method for its assembly
Actionneur magnétique ainsi que son procédé de montage

(30) Priorität: 13.01.2010 DE 102010004642
(43) Veröffentlichungstag der Anmeldung: 20.07.2011
(73) Patentinhaber: Integrated Dynamics Engineering, 65479 Raunheim (DE)
(72) Erfinder: Evers, Arndt, 65375 Oestrich-Winkel (DE); Tillmann, Ralf, Dr., 68309 Mannheim (DE)
(74) Vertreter: Herden, Andreas F.

(56) Entgegenhaltungen:
- EP-A1- 1 857 878
- CN-A- 1 170 212
- DE-A1- 10 330 418
- DE-A1-102008 007 712
- US-A1- 2003 127 317
- US-A1- 2003 127 916

## Beschreibung

### Beschreibung

### Gebiet der Erfindung

Die Erfindung betrifft einen Magnetaktor sowie ein Verfahren zu dessen Montage. Insbesondere betrifft die Erfindung einen als Kraftaktor ausgebildeten Magnetaktor zur aktiven Schwingungsisolation für ein Schwingungsisolationssystem in der Halbleitertechnik.

### Hintergrund der Erfindung

Magnetaktoren sind bekannt. Es handelt sich dabei um eine Art Linearmotor, welcher eine Spule umfasst, welche zwischen Permanentmagneten angeordnet ist. Bei der Verwendung eines derartigen Magnetaktors zur aktiven Schwingungsisolation wird ein Teil des Magnetaktors, beispielsweise die Spule, an der zu isolierenden Last und der andere Teil, beispielsweise die Permanentmagnete, an der Basis befestigt. Über eine Ansteuerung der Spule lässt sich über den Magnetaktor eine Kraft in zumindest eine Richtung erzeugen. Hierdurch kann der Magnetaktor beispielsweise parallel zu einem Fluidlager zur aktiven Schwingungsisolation verwendet werden. Insbesondere werden mit derartigen Magnetaktoren Schwingungen reduziert, die von der zu isolierenden Last selbst, wie beispielsweise einer Waferinspektionsmaschine mit sich bewegenden Teilen erzeugt werden.

Aus der Praxis sind Magnetaktoren bekannt, bei welchen die Permanentmagneten auf einer Befestigungsplatte aufgeklebt sind. Nachteilig ist die schwierige Positionierung der Magnete beim Einkleben, insbesondere aufgrund der Magnetkräfte nachdem der erste Magnet eingeklebt ist. Es ist daher in der Regel erforderlich, immer nur einen einzelnen Magneten einzukleben und mit dem Einkleben des nächsten Magnetes so lange zu warten, bis der Kleber des zuvor eingeklebten Magnetes ausgehärtet ist.

Des Weiteren sind aus der Praxis bekannte Magnetaktoren in der Regel allenfalls für die Erzeugung einer maximalen Kraft von 70 N vorgesehen. Sofern je nach Applikation eine höhere Kraft erforderlich ist, müssen mehrere Aktoren parallel betrieben werden.

Die Offenlegungsschrift US 2003/0127916 A1 zeigt ein Linear-Schwingspulenbetätigungsglied, bei welchem eine Mehrzahl von Magneten auf einem Träger angeordnet ist.

### Aufgabe der Erfindung

Der Erfindung liegt dem gegenüber die Aufgabe zugrunde, die genannten Nachteile des Standes der Technik zu reduzieren.

Es ist insbesondere eine Aufgabe der Erfindung, einen einfacher montierbaren Magnetaktor bereitzustellen, mit welchem sich hohe Kräfte erzeugen lassen.

### Beschreibung der Erfindung

Die Aufgabe der Erfindung wird bereits durch einen Magnetaktor sowie ein Verfahren zur Montage eines Magnetaktors nach einem der unabhängigen Ansprüche gelöst.

Bevorzugte Ausführungsformen und Weiterbildungen der Erfindung sind dem Gegenstand der jeweiligen Unteransprüche zu entnehmen.

Die Erfindung betrifft einen Magnetaktor, welcher zwei gegenüberliegende Seitenteile mit Permanentmagneten umfasst. Erfindungsgemäß sind die Permanentmagnete in Halbach-Konfiguration angeordnet. Dabei werden die Permanentmagnete mit jeweils rotierender magnetischer Orientierung zueinander angeordnet. Über eine auch als Halbach-Aray bekannte Anordnung lässt sich auf einer Seite der magnetische Fluss verstärken und auf der anderen Seite der magnetische Fluss schwächen.

Zwischen den Seitenteilen, welche sich mit der Seite, auf der die Flussverstärkung auftritt, gegenüberliegen, ist eine Spule angeordnet, welche relativ zu den Seitenteilen beweglich ist. Durch Ansteuern der Spule entsteht eine Kraft zwischen den Seitenteilen und der Spule, in der Regel senkrecht zur Spulenachse. Die Spule ist dazu in der Regel mit einem Steuergerät verbunden, welches Teil einer aktiven Schwingungsisolation ist und über das die Spule mit Strom beaufschlagt wird. So lässt sich eine definierte Kraft erzeugen.

Die Permanentmagnete sind in einem Einschubrahmen gehalten. Unter einem Einschubrahmen wird ein Rahmen verstanden, welcher auf einer Seite derart offen ist, dass sich die Magnete nacheinander hinein schieben lassen. Die Höhe des Einschubs, in welchen die Magnete geschoben werden, ist dabei vorzugsweise kleiner als die Diagonale der Magnete in einer in Einschubrichtung liegenden Ebene. Hierdurch wird verhindert, dass sich die Magnete beim Einschieben gegeneinander verdrehen können.

So ist es möglich, die in Halbach-Konfiguration angeordnete Magnete nacheinander in den Einschubrahmen einzubringen, ohne dass sich so gegeneinander verdrehen, dass sich die Magnetisierungsrichtung zueinander ändert.

Gegenüber bekannten Klebeverfahren wird so eine erheblich erleichterte Montage ermöglicht. Weiter wird insbesondere eine einfache Montage der Magnete in Halbach-Konfiguration ermöglicht, was mittels Kleben nur sehr schwierig möglich ist. Aufgrund der Flussverstärkung durch die verwendete Halbach-Konfiguration kann ein Magnetaktor mit erhöhter Kraft bereitgestellt werden.

Vorzugsweise umfasst jedes Seitenteil zumindest drei, besonders bevorzugt zumindest fünf in Halbach-Konfiguration angeordnete Permanentmagnete.

Bei einer Weiterbildung der Erfindung umfasst jedes Seitenteil zumindest zwei nebeneinander angeordnete Reihen von den in Halbach-Konfiguration angeordneten Magneten.

Zur Versteifung weist der Einschubrahmen vorzugsweise einen zwischen den Reihen angeordneten Steg auf.

Bei einer Weiterbildung der Erfindung sind die Seitenteile an zwei sich gegenüberliegenden Seiten mit jeweils einer Platte verbunden. Im Gegensatz zu U-förmig ausgebildeten Magnetaktoren sind so die Seitenteile mit höherer Genauigkeit zueinander ausgerichtet und es kommt insbesondere nicht zu Verbiegungen aufgrund der Magnetkräfte.

Bei einer Weiterbildung der Erfindung umfassen die Seitenteile eine Fixierungsplatte, die mit dem Einschubrahmen verbunden ist.

Die Fixierungsplatte weist vorzugsweise Klemmmittel, insbesondere Schrauben zum Einklemmen der Permanentmagnete auf. Auch der Einschubrahmen kann Klemmmittel wie beispielsweise Schrauben zum Einklemmen der Permanentmagnete aufweisen.

So ist es möglich, nach dem Einschieben der Magnete in den Einschubrahmen diese über die Klemmmittel exakt zueinander auszurichten.

Es ist so möglich, einen relativ dünn ausgebildeten Einschubrahmen zu verwenden. Wichtig ist dabei insbesondere, dass der Einschubrahmen auf der der Spule gegenüberliegenden Seite möglichst dünn ausgebildet ist, damit die Magnete möglichst nahe an der Spule liegen. Insbesondere beträgt die Wandstärke des Einschubrahmens auf der zur Spule angrenzenden Seite weniger als 1 mm, vorzugsweise weniger als 0,5 mm und besonders bevorzugt weniger als 0,3 mm.

Diese dünne Ausgestaltung des beispielsweise als Edelstahl- oder Aluminium-Frästeil hergestellten Rahmens resultiert zwangsläufig in einer geringen Stabilität. So ist der Rahmen in der Regel allein nicht dafür ausgelegt, die Permanentmagnete exakt gegeneinander ausgerichtet zu halten.

Vielmehr dient der Rahmen der groben Ausrichtung der Magnete, insbesondere dazu, dass diese sich beim Einschieben nicht gegeneinander verdrehen. Die exakte Ausrichtung wird vorzugsweise mittels Klemmmitteln vorgenommen, mittels denen von mindestens zwei Seiten die Magnete exakt ausgerichtet werden können.

Bei einer Weiterbildung der Erfindung umfasst zumindest der Einschubrahmen Passmittel, insbesondere Bohrungen für einen Passstift, zu dessen exakter Positionierung. Es ist insbesondere vorgesehen, die Seitenteile mittels Passstiften gegen eine Platte, welche die beiden Seitenteile zusammenhält, exakt gegeneinander auszurichten, so dass der Zwischenraum zwischen den beiden Seitenteilen, in welchem die Spule angeordnet ist, möglichst klein gehalten werden kann. Insbesondere ist vorgesehen, dass das Spulengehäuse zwischen den Seitenteilen ein maximales Spiel von weniger als 2 mm aufweist.

Durch eine möglichst nahe Positionierung von Spule und Permanentmagneten zueinander lassen sich höhere Kräfte erzielen.

Der Magnetaktor wird insbesondere für ein Schwingungsisolationssystem verwendet, welches der schwingungsisolierten Lagerung eines Lithographie- oder Waferinspektionsgerätes dient.

Das Schwingungsisolationssystem umfasst zumindest ein Lager, insbesondere ein Fluidlager, welches zumindest in vertikaler und/oder horizontaler Richtung wirksam ist. Zusätzlich umfasst das Schwingungsisolationssystem einen zuvor beschriebenen Magnetaktor, welcher zur aktiven Schwingungsisolation ansteuerbar ist.

Es ist insbesondere vorgesehen, ein horizontal und vertikal wirksames Luftlager zu verwenden. In der Regel werden zur aktiven Schwingungsisolation mehrere Magnetaktoren, insbesondere drei Magnetaktoren zur aktiven Schwingungsisolation in alle drei Raumrichtungen verwendet.

Vorzugsweise ist die Spule auf einer schwingungsisolierten Seite des Schwingungsisolationssystems befestigt. Dies hat den Vorteil, dass die Komponente mit dem geringeren Gewicht des Magnetaktors auf der zu isolierenden Seite befestigt ist. Nachteilig an dieser Anordnung ist zwar, dass durch das nötige Kabel zur Ansteuerung der Spule eine zusätzliche Steifigkeit der zu isolierenden Seite hinzugefügt wird. Von Vorteil ist dabei aber wiederum, dass mit den erfindungsgemäßen Magnetaktoren in der Regel auf eine Flüssigkeitskühlung der Spule verzichtet werden kann. Die Steifigkeit einer elektrischen Zuleitung kann in der Regel wesentlich geringer sein als die Steifigkeit von Fluidleitungen zur Kühlung. Es versteht sich, dass aber auch eine umgekehrte Anordnung denkbar ist.

Die Erfindung betrifft des Weiteren ein Verfahren zur Montage eines zuvor beschriebenen Magnetaktors, wobei eine Mehrzahl von Magneten nacheinander in Halbach-Konfiguration in einen Einschubrahmen geschoben werden und sodann mittels Klemmmitteln zueinander ausgerichtet werden.

Durch die Erfindung wird eine einfache und schnelle Montage eines Magnetaktors mit Magneten in Halbach-Konfiguration ermöglicht.

### Kurzbeschreibung der Zeichnungen

Die Erfindung soll im Folgenden Bezug nehmend auf die Zeichnungen Fig. 1 bis Fig. 6, in denen schematisch ein Ausführungsbeispiel der Erfindung dargestellt ist, näher erläutert werden.
- Fig. 1: zeigt eine schematische Explosionsdarstellung eines Magnetaktors,
- Fig. 2: zeigt den Magnetaktor im teilweise montierten Zustand,
- Fig. 3: zeigt den Magnetaktor im fertig montierten Zustand,
- Fig. 4: zeigt die Anordnung der Permanentmagnete des Magnetaktors,
- Fig. 5: zeigt die Permanentmagnete in den Einschubrahmen des Magnetaktors eingesetzt, und
- Fig. 6: zeigt die Explosionsdarstellung einer Spule mit zugehörigem Gehäuse.

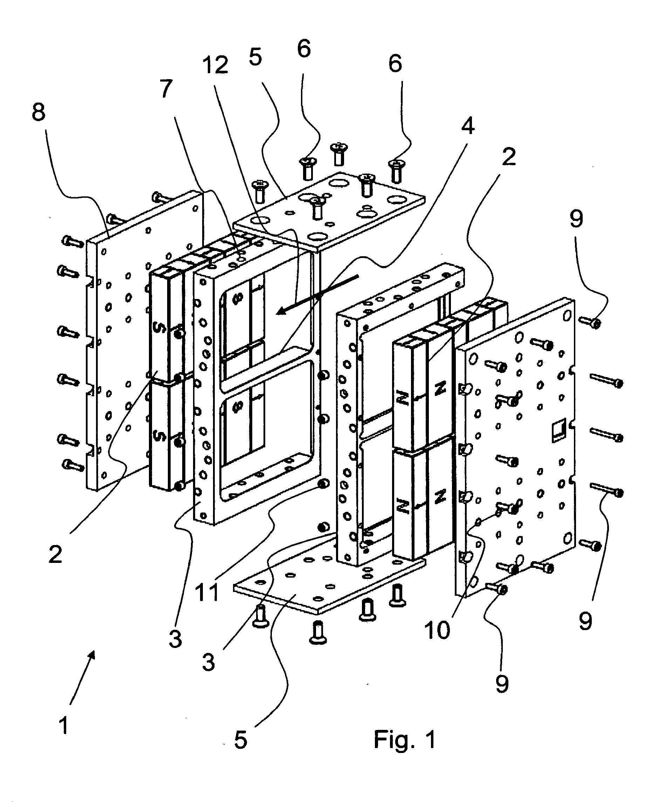

Fig. 1 zeigt eine Explosionsdarstellung eines Magnetaktors 1, wobei in dieser Darstellung die Spule nebst Gehäuse ausgeblendet ist.

Der Magnetaktor 1 umfasst zwei Seitenteile, welche jeweils aus Einschubrahmen 3, Permanentmagneten 2 und Fixierungsplatte 8 bestehen.

Der Einschubrahmen 3, welcher beispielsweise aus nicht ferromagnetischem Edelstahl gefräst ist, dient dem Einschub der in Halbach-Konfiguration angeordneten Magnete 2. Die Einschubrichtung ist mit dem Pfeil 12 markiert. Bei der Montage können die Permanentmagnete 2 nacheinander in zwei Reihen in den Einschubrahmen 3 geschoben werden. Dazu ist der Einschubrahmen 3 lediglich auf der Einschubseite derart offen, dass die Magnete eingeschoben werden können. Durch den Einschubrahmen 3 wird verhindert, dass die Magnete 2, welche jeweils in unterschiedlicher Magnetisierungsrichtung angeordnet sind, sich gegeneinander verdrehen. In den Einschubrahmen 3 sind jeweils zwei Reihen Magnete in Halbach-Konfiguration angeordnet. Die beiden sich so ergebenden gegenüberliegenden Seitenteile mit Permanentmagneten 2 sind derart angeordnet, dass gegenüberliegende Magnete mit einer Magnetisierungsrichtung parallel zur Einschubrichtung eine jeweils entgegen gerichtete Magnetisierungsrichtung aufweisen, wohingegen gegenüber liegende Magnete mit einer Magnetisierungsrichtung senkrecht zur Einschubrichtung dieselbe Magnetisierungsrichtung aufweisen.

In der Mitte jedes Einschubrahmens 3 ist ein Steg 4 vorgesehen, welcher in erster Linie der Versteifung des Einschubrahmens 3 dient, aber auch die beiden Magnetreihen voneinander trennt. Die Einschubrahmen des Magnetaktors 1 bestehen vorzugsweise aus nicht ferromagnetischem Material.

Die beiden Einschubrahmen 3 können mittels zweier Platten 5 miteinander verbunden werden. Dazu werden die Schrauben 6 durch die Platten 5 in vorgesehene Bohrungen des Einschubrahmens 3 gedreht. Für eine exakte Positionierung Des Einschubrahmens verfügt dieser über zumindest eine Bohrung 7 zum Einsetzen eines Passstiftes (nicht dargestellt).

Die Fixierungsplatten 8, welche mittels der Schrauben 9 an den Einschubrahmen 3 befestigt werden können, dienen zur Verstärkung des magnetischen Flusses und bestehen aus ferromagnetischem Material.

Des Weiteren umfassen die Fixierungsplatten 8 Schrauben 10, welche als Klemmmittel für die Magnete 2 dienen. Auch der Einschubrahmen 3 verfügt über senkrecht dazu stehende Schrauben 11, ausgebildet als Madenschrauben.

Mittels der Schrauben 10 und 11 können die Magnete 2 nach dem Einschieben in den Einschubrahmen 3 exakt ausgerichtet werden.

Insbesondere wird mittels der Schrauben 10 erreicht, dass die Magnete bündig an der der Spule (nicht dargestellt) zugewandten Seite des Einschubrahmens 3 angeordnet sind.

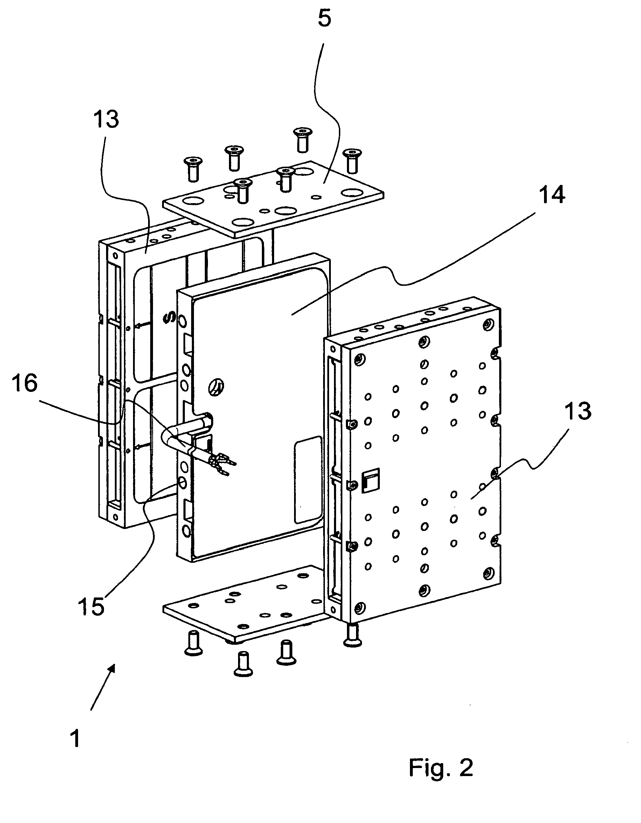

In der Darstellung in Fig. 2 sind die Seitenteile 13, bestehend aus Fixierungsplatte, Einschubrahmen und Magneten fertig montiert und müssen nur noch mit den Platten 5 zu einer rahmenförmigen Anordnung verbunden werden. Es versteht sich, dass diese Darstellung nicht zwingend die tatsächliche Reihenfolge der Montage wiedergibt. So ist es vorzugsweise vorgesehen, zunächst den Einschubrahmen mit den Platten 5 sowie den Fixierungsplatten zu verbinden und sodann die Magnete einzusetzen.

Zwischen den Seitenteilen 13 ist ein ebenfalls im Wesentlichen rechteckig ausgebildetes Spulengehäuse 14 angeordnet, in dem die Spule (nicht dargestellt) angeordnet ist. Aus dem Spulengehäuse ist ein Anschlusskabel 16 herausgeführt, welches der Ansteuerung der Spule dient. Zusätzlich kann die auch ein Erdungskabel (nicht dargestellt) heraus geführt sein, welches der Sicherheit dient, falls die Spule mit höherer Spannung angesteuert wird.

Weiter umfasst das Spulengehäuse 14 Befestigungsausnehmungen 15, mittels der es beispielsweise am zu isolierenden Teil oder am Bodenteil eines Schwingungsisolationssystems befestigt werden kann (nicht dargestellt). Die Befestigungsausnehmungen 15 sind beispielsweise als Gewinde ausgebildet.

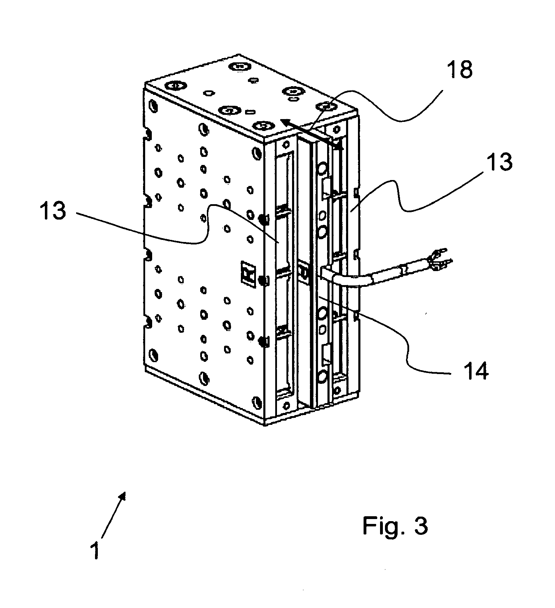

Fig. 3 zeigt den fertig montierten Magnetaktor 1. Zu erkennen sind die beiden sich gegenüberliegenden Seitenteile 13, zwischen denen sich das Spulengehäuse 14 befindet.

Durch Ansteuern der Spule im Spulengehäuse 14 kann eine Kraft im Wesentlichen parallel zur Spulenebene erzeugt werden. Die Richtung dieser Kraft ist mit Pfeil 18 wiedergegeben.

Um eine möglichst hohe Kraft erreichen zu können, ist es wichtig, dass die Magnete und die Spule möglichst nahe zueinander angeordnet sind, das heißt, das Spiel des Spulengehäuses innerhalb des Schlitzes zwischen den Einschubrahmen 13 sowie der Abstand zu den Magneten sollte möglichst gering sein.

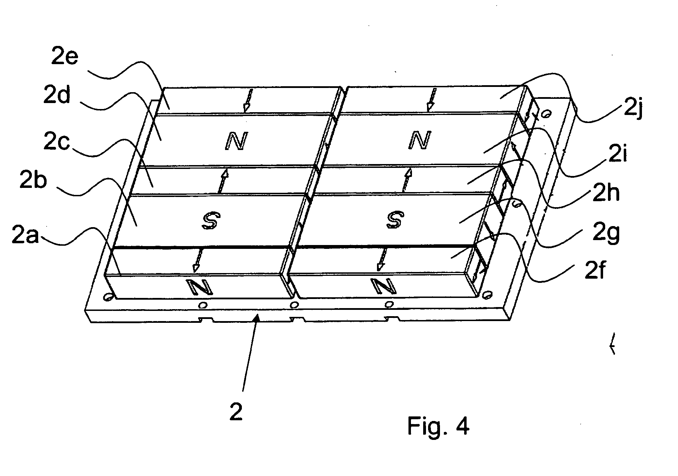

Fig. 4 zeigt eine Detaildarstellung der Permanentmagnete 2. Die Permanentmagnete 2 sind in zwei Reihen mit jeweils fünf Magneten angeordnet.

Die Magnete 2a bis 2e bilden dabei die eine in Halbach-Konfiguration angeordnete Reihe, die Magnete 2f bis 2j die andere. Jede Reihe umfasst somit fünf in Halbach-Konfiguration angeordnete Magnete.

Bei einer alternativen Ausführungsform können beispielsweise die Magnete 2a, 2e, 2f und 2j weggelassen werden, so dass jede Reihe nur drei in Halbach-Konfiguration angeordnete Magnete umfasst. Der Nordpol der Magnete ist mit einem N, der Südpol mit einem S gekennzeichnet und die entsprechende Magnetisierungsrichtung mit einem Pfeil angegeben. Für einen gattungsgemäßen Magnetaktor werden äußerst starke Permanentmagnete verwendet, welche aufgrund der unterschiedlichen Magnetisierungsrichtung zum Verdrehen gegeneinander neigen.

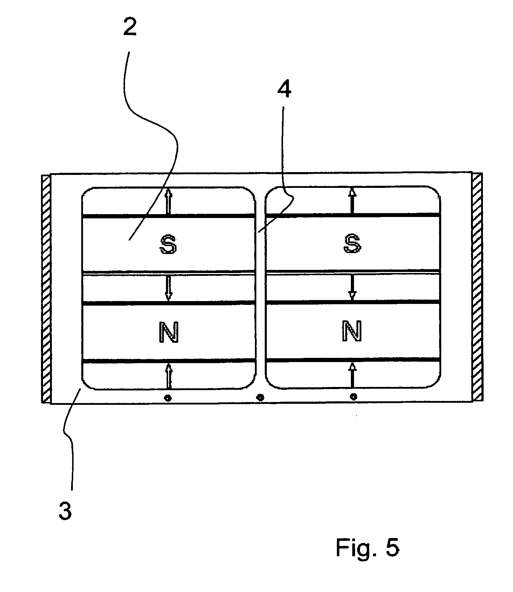

In Fig. 5 sind die in einen Einschubrahmen 3 eingeschobenen Magnete 2 dargestellt. In dieser Darstellung ist die Seite des Einschubrahmens zu sehen, welche im montierten Zustand der Spule gegenüberliegt. Zu erkennen ist der mittige Steg 4 des Einschubrahmens. Die in dieser Ansicht dargestellte Seite des Einschubrahmens 3 sollte möglichst dünn ausgebildet sein, so dass die Magnete 2 möglichst nahe an der Spule liegen.

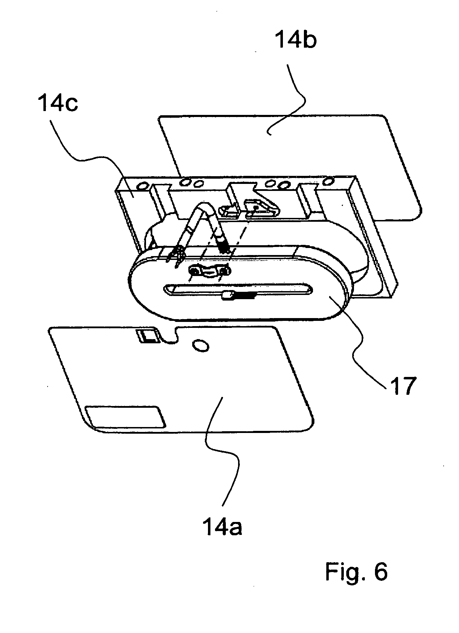

Fig. 6 zeigt schematisch das Spulengehäuse, bestehend aus den Seitenteilen 14a, 14b sowie dem Mittelteil 14c.

Das Mittelteil 14c verfügt über eine Aussparung zur Aufnahme der Spule 17, welche beispielsweise mindestens 1000 Windungen (nicht dargestellt) umfassen kann. Die Spulenebene liegt im Wesentlichen parallel zu den Seitenteilen 14a, 14b.

Durch die Erfindung konnte ein Magnetaktor bereitgestellt werden, mit dem sich eine Kraft deutlich über 100 N erzeugen lässt. Durch den verwendeten Einschubrahmen wird eine besonders einfache Montage der in Halbach-Konfiguration angeordneten Magnete ermöglicht.

Es versteht sich, dass die Erfindung nicht auf eine Kombination vorstehend beschriebener Merkmale beschränkt ist, sondern dass der Fachmann sämtliche beschriebenen Merkmale, soweit dies technisch sinnvoll ist, in beliebiger Kombination verwenden wird.

### Bezugszeichenliste

- 1: Magnetaktor
- 2: Magnete
- 3: Einschubrahmen
- 4: Steg
- 5: Platte
- 5: Schraube
- 6: Bohrung
- 8: Fixierungsplatte
- 9: Schraube
- 10: Schraube
- 11: Schraube
- 12: Pfeil
- 13: Seitenteil
- 14: Spulengehäuse
- 14a: Seitenteil
- 14b: Seitenteil
- 14c: Mittelteil
- 15: Befestigungsausnehmung
- 16: Anschlusskabel
- 17: Spule
- 18: Pfeil

## Patentansprüche

1. Magnetaktor (1) , umfassend zwei gegenüberliegende Seitenteile (13) mit Permanentmagneten (2), wobei jedes Seitenteil (13) zumindest zwei Permanentmagneten mit zueinander unterschiedlicher Magnetisierungsrichtung umfasst, und wobei sich zwischen den Seitenteilen (13) eine Spule (17) befindet, derart dass die Spule (17) relativ zu den Seitenteilen (13) beweglich ist, wobei beim Ansteuern der Spule (17) eine Kraft zwischen den Seitenteilen (13) und der Spule (17) entsteht, und wobei die Permanentmagneten (2) der Seitenteile in Halbach-Konfiguration angeordnet und jeweils in einem Einschubrahmen (3) eingeschoben und gehalten sind.

2. Magnetaktor nach dem vorstehenden Anspruch, **dadurch gekennzeichnet, dass** jedes Seitenteil (13) zumindest 3, vorzugsweise zumindest 5 in Halbach-Konfiguration angeordnete Permanentmagnete (2) umfasst.

3. Magnetaktor nach einem der vorstehenden Ansprüche, **dadurch gekennzeichnet, dass** die Seitenteile (13) zumindest zwei nebeneinander angeordnete Reihen von in Halbach-Konfiguration angeordneten Magneten (2) umfassen.

4. Magnetaktor nach dem vorstehenden Anspruch, **dadurch gekennzeichnet, dass** der Einschubrahmen (3) einen zwischen den Reihen angeordneten Steg (4) aufweist.

5. Magnetaktor nach einem der vorstehenden Ansprüche, **dadurch gekennzeichnet, dass** die Seitenteile (13) an zwei sich gegenüberliegenden Seiten mit jeweils einer Platte (5) verbunden sind.

6. Magnetaktor nach einem der vorstehenden Ansprüche, **dadurch gekennzeichnet, dass** die Seitenteile (13) eine Fixierungsplatte (8) umfassen, die mit dem Einschubrahmen (3) verbunden ist.

7. Magnetaktor nach dem vorstehenden Anspruch, **dadurch gekennzeichnet, dass** die Fixierungsplatte (8) Klemmmittel, insbesondere Schrauben (10), zum Einklemmen der Permanentmagnete (2) umfasst.

8. Magnetaktor nach einem der vorstehenden Ansprüche, **dadurch gekennzeichnet, dass** die Einschubrahmen (3) Klemmmittel, insbesondere Schrauben (11), zum Einklemmen der Permanentmagnete (2) umfasst.

9. Magnetaktor nach einem der vorstehenden Ansprüche, **dadurch gekennzeichnet, dass** der Einschubrahmen (3) nur auf einer Seite offen für den Einschub eines Magneten ist.

10. Magnetaktor nach einem der vorstehenden Ansprüche, **dadurch gekennzeichnet, dass** die Höhe des Einschubs des Einschubrahmens (3) kleiner ist, als die Diagonale der Permanentmagnete (2) in einer in Einschubrichtung verlaufenden Ebene.

11. Magnetaktor nach einem der vorstehenden Ansprüche, **dadurch gekennzeichnet, dass** die Einschubrahmen Passmittel, insbesondere Bohrungen für einen Passstift zur Positionierung aufweisen.

12. Schwingungsisolationssystem, insbesondere zur schwingungsisolierten Lagerung eines Lithografie- oder Waferinspektionsgerätes, umfassend zumindest ein Lager, insbesondere Fluidlager, welches zumindest in vertikaler und/oder horizontaler Richtung wirksam ist, wobei das Schwingungsisolationssystem zumindest einen Magnetaktor (1) nach einem der vorstehenden Ansprüche umfasst, welcher zur aktiven. Schwingungsisolation ansteuerbar ist.

13. Schwingungsisolationssystem nach dem vorstehenden Anspruch, **dadurch gekennzeichnet, dass** die Spule auf einer schwingungsisolierten Seite des Schwingungsisolationssystems befestigt ist.

14. Verfahren zu Montage eines Magnetaktors (1), nach einem der vorstehenden Ansprüche 1-11, wobei eine Mehrzahl von Magneten (2) nacheinander in Halbach-Konfiguration in einen Einschubrahmen (3) geschoben wird und sodann mittels Klemmmitteln zueinander ausgerichtet werden.

## Claims

1. Magnetic actuator (1) comprising two opposing lateral parts (13) with permanent magnets (2), wherein each lateral part (13) comprises at least two permanent magnets with mutually different directions of magnetisation, and wherein a coil (17) is located between the lateral parts (13) in such a way that the coil (17) is movable relative to the lateral parts (13), wherein a force arises between the lateral parts (13) and the coil (17) when the coil (17) is energised, and wherein the permanent magnets (2) of the lateral parts are disposed in a Halbach configuration and are each pushed into and held in a push-in frame (3).

2. Magnetic actuator as claimed in the preceding claim, **characterised in that** each lateral part (13) comprises at least 3, preferably at least 5, permanent magnets (2) disposed in a Halbach configuration.

3. Magnetic actuator as claimed in any one of the preceding claims, **characterised in that** the lateral parts (13) comprise at least two mutually adjacent rows of magnets (2) disposed in a Halbach configuration.

4. Magnetic actuator as claimed in the preceding claim, **characterised in that** the push-in frame (3) comprises a web (4) disposed between the rows.

5. Magnetic actuator as claimed in any one of the preceding claims, **characterised in that** the lateral parts (13) are connected to a respective plate (5) at two mutually opposing sides.

6. Magnetic actuator as claimed in any one of the preceding claims, **characterised in that** the lateral parts (13) comprise a fixing plate (8) which is connected to the push-in frame (3).

7. Magnetic actuator as claimed in the preceding claim, **characterised in that** the fixing plate (8) comprises clamping means, in particular screws (10), for clamping in the permanent magnets (2).

8. Magnetic actuator as claimed in any one of the preceding claims, **characterised in that** the push-in frame (3) comprises clamping means, in particular screws (11), for clamping in the permanent magnets (2).

9. Magnetic actuator as claimed in any one of the preceding claims, **characterised in that** the push-in frame (3) is open only on one side for insertion of a magnet.

10. Magnetic actuator as claimed in any one of the preceding claims, **characterised in that** the insertion height of the push-in frame (3) is less than the diagonal of the permanent magnets (2) in a plane extending in the direction of insertion.

11. Magnetic actuator as claimed in any one of the preceding claims, **characterised in that** the push-in frames comprise locating means, in particular bores for a locating pin, for positioning purposes.

12. Vibration isolation system, in particular for vibration-isolated mounting of a lithography or wafer inspection device, comprising at least one bearing, in particular a fluid bearing, which is effective at least in a vertical and/or horizontal direction, wherein the vibration isolation system comprises at least one magnetic actuator (1) as claimed in any one of the preceding claims, which can be activated for active vibration isolation.

13. Vibration isolation system as claimed in the preceding claim, **characterised in that** the coil is fastened to a vibration-isolated side of the vibration isolation system.

14. Method for assembling a magnetic actuator (1) as claimed in any one of the preceding claims 1-11, wherein a plurality of magnets (2) are pushed one after the other in a Halbach configuration into a push-in frame (3) and then oriented relative to each other by clamping means.

## Revendications

1. Actionneur magnétique (1), comportant deux pièces latérales (13) opposées avec des aimants permanents (2), chaque pièce latérale (13) comprenant au moins deux aimants permanents à sens d'aimantation différents l'un de l'autre, et une bobine (17) étant intercalée entre les pièces latérales (13), de sorte que la bobine (17) est mobile par rapport aux pièces latérales (13), une force entre les pièces latérales (13) et la bobine (17) étant générée par excitation de la bobine (17), et les aimants permanents (2) des pièces latérales (13) étant disposés suivant une configuration de Halbach et enchâssés et maintenus chacun dans un cadre d'insertion (3).

2. Actionneur magnétique selon la revendication précédente, **caractérisé en ce que** chaque pièce latérale (13) comprend au moins 3, préférentiellement au moins 5, aimants permanents (2) disposés suivant une configuration de Halbach.

3. Actionneur magnétique selon l'une des revendications précédentes, **caractérisé en ce que** les pièces latérales (13) comprennent au moins deux rangées côte à côte d'aimants (2) disposés suivant une configuration de Halbach.

4. Actionneur magnétique selon la revendication précédente, **caractérisé en ce que** le cadre d'insertion (3) présente une traverse (4) disposée entre les rangées.

5. Actionneur magnétique selon l'une des revendications précédentes, **caractérisé en ce que** les pièces latérales (13) sont reliées à une plaque (5) sur deux côtés opposés.

6. Actionneur magnétique selon l'une des revendications précédentes, **caractérisé en ce que** les pièces latérales (13) présentent une plaque de fixation (8) qui est raccordée au cadre d'insertion (3).

7. Actionneur magnétique selon la revendication précédente, **caractérisé en ce que** la plaque de fixation (8) présente des moyens de serrage, en particulier des vis (10), pour l'enchâssement des aimants permanents (2).

8. Actionneur magnétique selon l'une des revendications précédentes, **caractérisé en ce que** le cadre d'insertion (3) présente des moyens de serrage, en particulier des vis (11), pour l'enchâssement des aimants permanents (2).

9. Actionneur magnétique selon l'une des revendications précédentes, **caractérisé en ce que** le cadre d'insertion (3) n'est ouvert que sur un côté pour l'insertion d'un aimant.

10. Actionneur magnétique selon l'une des revendications précédentes, **caractérisé en ce que** la hauteur d'insertion du cadre d'insertion (3) est inférieure à la diagonale des aimants permanents (2) sur un plan s'étendant dans la direction d'insertion.

11. Actionneur magnétique selon l'une des revendications précédentes, **caractérisé en ce que** les cadres d'insertion présentent des moyens d'ajustement, en particulier des alésages pour un goujon de positionnement.

12. Système d'isolation contre les vibrations, en particulier pour le montage sur palier isolé des vibrations d'un appareil de lithographie ou d'inspection de tranches de semi-conducteurs, comprenant au moins un palier, en particulier un palier fluide efficace au moins en direction verticale et/ou horizontale, ledit système d'isolation contre les vibrations comprenant au moins un actionneur magnétique (1) selon l'une des revendications précédentes, lequel peut être excité pour une isolation active contre les vibrations.

13. Système d'isolation contre les vibrations selon la revendication précédente, **caractérisé en ce que** la bobine est fixée sur un coté isolé contre les vibrations du système d'isolation contre les vibrations.

14. Procédé de montage d'un actionneur magnétique (1) selon l'une des revendications 1 à 11, dans lequel une pluralité d'aimants (2) sont insérés l'un après l'autre dans un cadre d'insertion (3) suivant une configuration de Halbach avant d'être alignés entre eux avec des moyens de serrage.
